# EUROPEAN PATENT SPECIFICATION

(11) **EP 0 828 373 B1**
(45) Date of publication and mention of the grant of the patent: **24.05.2006**
(21) Application number: 97306911.5
(22) Date of filing: 05.09.1997
(51) Int. Cl.: H04N 1/32

(54) **Communication apparatus**
Übertragungsgerät
Dispositif de communication

(30) Priority: 06.09.1996 JP 23657496
(43) Date of publication of application: 11.03.1998
(73) Proprietor: CANON KABUSHIKI KAISHA, Tokyo (JP)
(72) Inventor: Otsuka, Koichiro, Ohta-ku, Tokyo (JP)
(74) Representative: Beresford, Keith Denis Lewis

(56) References cited:
- EP-A- 0 262 603
- EP-A- 0 540 378
- DE-A- 3 921 617

## Description

### BACKGROUND OF THE INVENTION

### Field of the Invention

The present invention relates to a communication apparatus connectable to an information processing terminal equipment, and to a system comprising a communication apparatus and an information processing terminal equipment.

### Related Background Art

Hither to, as such a communication apparatus has been a facsimile connectable to an information processing terminal equipment (such as a computer). The facsimile can be remotely controlled by the information processing terminal equipment. For example, the information processing terminal equipment can utilize an automatic call function provided in the facsimile. In this case, the information processing terminal equipment sends a call request and information on a called station to the facsimile, and upon reception of this call request, the facsimile automatically calls the every station by using its automatic call function.
Each country in the world has its own standards for automatic call because of its specified situation. The standards are variable with regard to intervals between redialing, conditions of redialing, and the like. In a facsimile also, an automatic call function is designed so as to satisfy the standards in the respective countries. If the facsimile operates as a stand-alone apparatus, it is so designed to satisfy the standards in a destined country.

However, if a call request is issued remotely from an information processing terminal equipment, the facsimile operates in accordance with this call request, even if the call request is not in conformity with the standards in the destined countrv. In this case, therefore, the problem occurs that an automatic call not matching the standards in the country is executed.

It is a concern of the present invention to improve a communication apparatus and a system comprising a communication apparatus and an information processing terminal equipment so as to remove the above-mentioned problem.

It is another concern of the present invention to allow the whole system including a communication apparatus and an information processing terminal equipment to operate in accordance with the standards in the destined country.

European Patent Specification No. EP-A-0540378 discloses a remotely controllable facsimile apparatus. The facsimile apparatus is connectable to an information processing apparatus by a line different from the normal telephone line. However this prior specification is concerned solely with the transmission of data on the assumption that the standards of any destination to be communicated have already been established.

In accordance with the present invention there is provided a communication apparatus as set out in claim 1 and a method as set out in claim 5.

Other features of the invention will become apparent from the following detailed description of the embodiments taken in conjunction with the accompanying drawings.

### BRIEF DESCRIPTION OF THE DRAWINGS

Fig. 1 is a block diagram showing the structure of a system according to an embodiment of the invention;
Fig. 2 is a flow chart illustrating the system operation when a facsimile notifies an information processing terminal equipment of TYPE setting information of a destined country;
Fig. 3 is a flow chart illustrating the control operation of a CPU of the facsimile during the system operation shown in Fig. 2;
Fig. 4 is a flow chart illustrating the processes of an application software of the information processing terminal equipment during the system operation shown in Fig. 2;
Fig. 5 is a flow chart illustrating the system operation when the information processing terminal equipment sets the functions of the facsimile;
Fig. 6 is a flow chart illustrating the processes of the application software of the information processing terminal equipment during the system operation shown in Fig. 5;
Fig. 7 is a flow chart illustrating the control operation of the CPU of the facsimile during the system operation shown in Fig. 5;
Fig. 8 is a diagram illustrating a communication sequence of data write service;
Fig. 9 is a table showing the format of a data write command;
Fig. 10 is a table showing the format of parameters of the data write command;
Fig. 11 is a table showing the format of a memory state inquiry command;
Fig. 12 is a table showing the format of parameters responsive to the memory state inquiry command;
Fig. 13 is a table showing the format of a data transfer command;
Fig. 14 is a table showing the format of parameters of the data transfer command;
Fig. 15 is a diagram showing a communication sequence of data read service;
Fig. 16 is a table showing the format of a data read command;
Fig. 17 is a table showing the format of parameters of the data read command;
Fig. 18 is a table showing the format of a data transfer request command; and
Fig. 19 is a table showing the format of parameters responsive to the data transfer request command.

### DETAILED DESCRIPTION OF THE PREFERRED EMBODIMENTS

An embodiment of the invention will be described in detail with reference to the accompanying drawings. In the following embodiment, a system comprising a facsimile and an information processing terminal equipments (such as a computer) will be described by way of example.

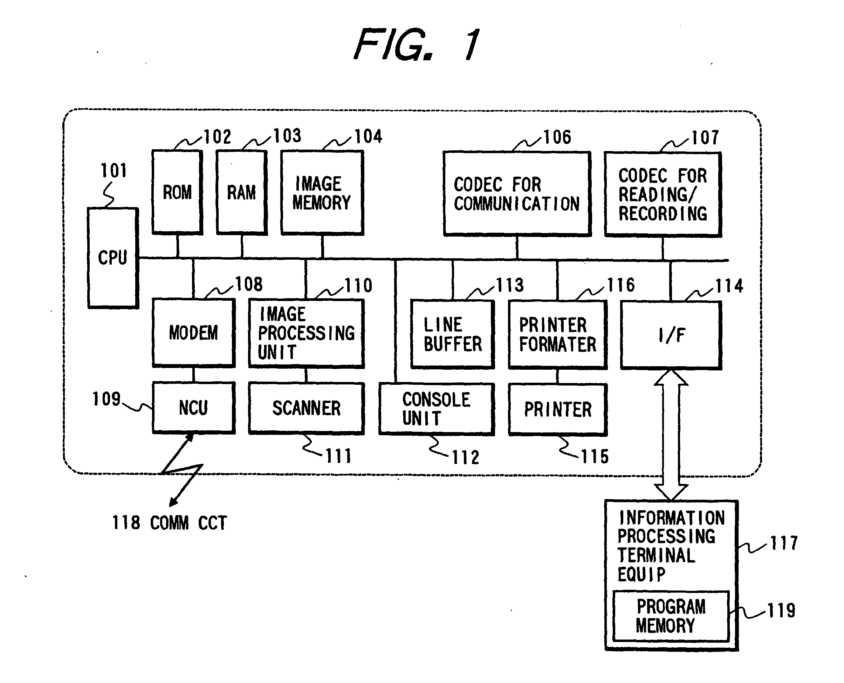

Fig. 1 is a block diagram showing the structure of the system according to the embodiment.

A CPU 101 operates as a system controller of a facsimile to control the facsimile overall, and is constituted of a microcomputer and the like.

A ROM 102 stores control programs of the CPU 101, and a RAM 103 stores program controlling variables and the like and may be an SRAM or the like. Values registered by an operator, management data of the facsimile, buffer data for working, and the like are also stored in this RAM 103.

An image memory 104 is composed of a DRAM or the like and stores image data therein.

A communication coder/decoder (communication codec) 106 performs coding/decoding of transmission/reception image data and is used for facsimile communication. A reading/recording coder/decoder (reading/recording codec) 107 performs coding/decoding of read image data and image data to be recorded.

A modulator/demodulator (modem) 108 performs modulation/demodulation of transmission/reception signals in facsimile communication.

A network control unit (NCU) 109 has an automatic dialing function. The NCU 109 operates to send a selection signal (dial pulse signal or tone dial signal) to a communication line (circuit) 118 in accordance with dial data supplied from the CPU 101, detects a call signal from the communication line 118, and performs line control operations such as capture/release of the communication line 118.

A scanner 111 is constituted of a contact type image sensor, an original feeder mechanism and the like. The scanner 111 optically reads an original image and converts it into electrical image data. The image data read with the scanner 111 is processed by an image processing unit 110 for shading correction and other necessary image corrections, and outputted as high precision image data.

A console unit 112 is constituted of a keyboard and the like and used by an operator for various types of input operations.

A line buffer 113 is a line buffer memory used for the transfer control of image data.

A computer interface (I/F) 114 is an interface connected between an information processing terminal equipment 117 and the facsimile. In this example, a bi-directional parallel interface (based on IEEE 1284) is used. In the information processing terminal equipment 117, there is installed an application software used for remotely controlling the facsimile to transfer data via the interface 114.

A printer 115 is a laser beam printer, an ink jet printer or the like which records data on a recording sheet. The data to be recorded includes received image data, read image data, image data and file data supplied from the information processing terminal equipment, and the like. A printer formatter 116 analyzes a printer description language of file data supplied from the information processing terminal equipment 117 and converts it into image data to be printed.

Reference numeral 119 represents a program memory which stores therein computer programs such as application software to be executed by the information processing terminal equipment 117.

Every country has specific limitations (PTT standards) on and operation parameters and communication conditions of a facsimile. The contents of the PTT standards are as follows:
Allowed number of times and time interval of redialing are different for each country;
User's telephone number is prohibited in Hungary and Slovenia;
User's abbreviated name is prohibited in Slovenia;
Telephone line type is prohibited in Denmark, Norway and Sweden;
OFF-selection of a transmission/reception result report selection is prohibited in Germany;
Automatic print-out of a communication management report is prohibited in Germany;
Intermediate pause is prohibited in Sweden;
Continuous pauses are prohibited in U.K., Sweden, and Hong Kong;
Last pause is prohibited in Swiss and Sweden; and
Error dialing check is restricted to twice in France.

As above, it is necessary to change a user data registration menu and a user data setting range for each country. At present, in a facsimile employed in the areas (such as European area) where a 230 V main source is used, one hardware with a ROM is arranged to cover the following twenty six countries. For the designation of the country, TYPE setting is changed in a service software switch on the console unit 112.

U.K., Austria, Belgium, Switzerland, Czech Slovak, Denmark, Finland, France, Germany, Netherlands, Slovenia, Hungary, Ireland, Italy, Sweden, Norway, Spain, Portugal, Europe (other areas), Singapore, Australia, New Zealand, Malaysia, China, Hong Kong, and South Africa.

In the facsimile, the ROM stores twenty six default tables in order to satisfy the PTT standards of the 230 V areas in the world. A desired default table is selected by changing the TYPE setting in the service software switch to meet the PTT standards.

In the system composed of the information processing terminal equipments and the facsimiles, it is also required to satisfy the PTT standards. In this embodiment, similar to the above-mentioned facsimile, a user data registration menu is provided in the application software used for the remote control of the facsimile by the information processing terminal equipment.

For the registration of user data of the facsimile, it is required that by the information processing terminal equipment 117, the user data registration menu and the setting range displayed on the information processing terminal equipment 117 are identical to or similar to those in the facsimile. For example, in the case of a system destined to Hungary, the user's telephone number is not indicated on the user data registration menu of the facsimile. Therefore, it is so arranged that the user's telephone number is not displayed on the user data registration menu of the application software of the information processing terminal equipment 117.

In the case of a system destined to Germany, the setting range of the number of times of redialing at the facsimile is "1 to 3". The application software of the information processing terminal equipment 117 has an address book function of storing telephone numbers of partner stations. By using this function the information processing terminal equipment 117 instructs the facsimile to call a partner station. In this case, the number of times of redialing in the facsimile should be set to "1 to 3" by the information processing terminal equipment.

In this embodiment, according to the application software, the information processing terminal equipment 117 received the TYPE setting information and representing the destined country standards automatically changes the user's data registration menu for the remote control of the facsimile in accordance with the TYPE setting information. In this manner, the application software of the information processing terminal equipment 117 satisfies the PTT standards of the destined country.

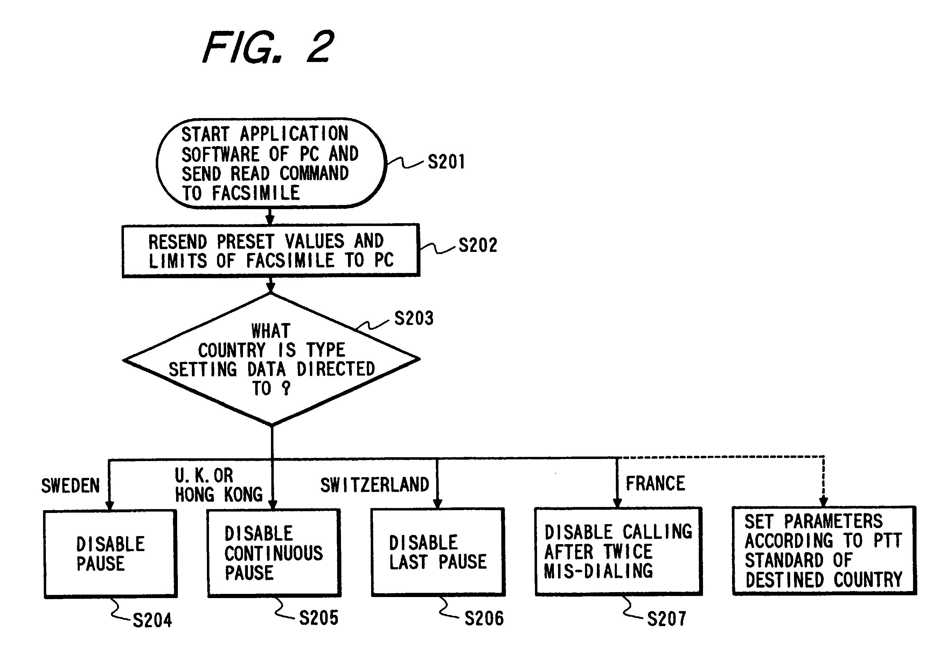

Fig. 2 is a flow chart illustrating the system operation after the application software of the information processing terminal equipment 117 starts.

When the application software of the information processing terminal equipment 117 starts, the terminal equipment 117 sends a data read service command to the facsimile, to obtain information on currently set values, range (value limits) and the like of the facsimile (S201). Upon reception of this data read service command, the facsimile sends the information on set values, value limits and the like, as parameter data of a predetermined format, to the information processing terminal equipment 117 via the interface 114 (S202). Upon reception of the information (parameter data) on set values, value limits and the like, the information processing terminal equipment 117 forms a user data menu in accordance with the received information, and thereafter sends another data read service command for receiving the TYPE setting information representative of the standards of the destined country. Upon reception of this data read service command, the facsimile sends the TYPE setting information to the information processing terminal equipment 117 (S202).

The information processing terminal equipment 117 identifies the received TYPE setting information (S203). If the TYPE setting information indicates Sweden, a pause cannot be set when the information processing terminal equipment 117 instructs the facsimile to make a call (S204). If the information indicates U.K. or Hong Kong, a continuous pause cannot be set when the information processing terminal equipment 117 instructs a call (S205). If the information indicates Switzerland, a last pause (a pause set at the end of a telephone number) cannot be set when the information processing terminal equipment 117 instructs a call (S206). If the information indicates France, it is inhibited to issue a call after twice of miss dialing when the information processing terminal equipment 117 instructs a call (S207). In this manner, by the user's data registration menu the standards of a country indicated by the TYPE setting information are set.

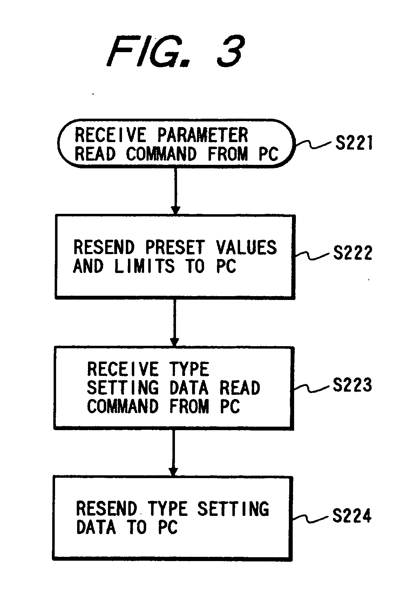

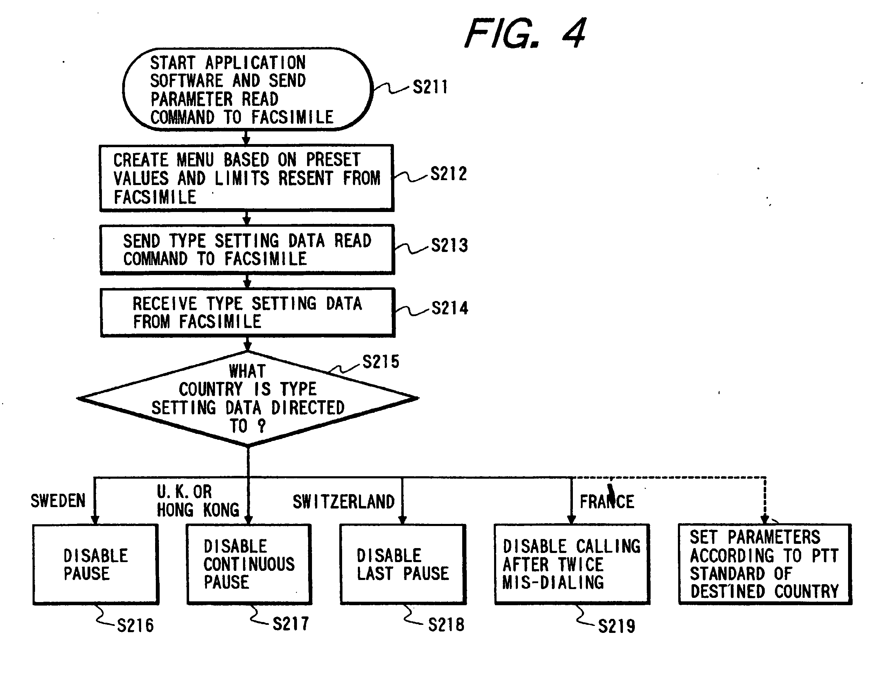

Fig. 3 is a flow chart illustrating the control operation to be executed by the CPU 101 of the facsimile of the above-described system, and Fig. 4 is a flow chart illustrating the processes of setting the user data registration menu in the application software to be executed by the information processing terminal equipment 117.

Referring to Fig. 3, upon reception of the data read service command requesting the information (preset data) on set values, value limits and the like from the information processing terminal equipment 117 via the interface 114 (S221), the CPU 101 of the facsimile reads the information on set values, value limits and the like stored in an EEPROM (or backed-up RAM), and transmits the read information as the parameter data of the predetermined format to the information processing terminal equipment 117 via the interface 114 (S222). The CPU 101 then waits for another data read service command for the TYPE setting information to be supplied from the information processing terminal equipment 117. Upon reception of this command from the information processing terminal equipment 117 (S223), the CPU reads the TYPE setting information of the destined country stored in the EEPROM and transmits it to the information processing terminal equipment 117 via the interface 114.

If the facsimile receives a command of a different kind from the information processing terminal equipment 117, it checks whether the received command can be acknowledged or not, and if the command can be acknowledged, the facsimile performs the operation corresponding to the command.

Referring to Fig. 4, when the application software starts, the information processing terminal equipment 117 transmits the data read service command to the facsimile via the interface in order to obtain the information (parameter data) on set values, value limits and the like (S211). The information processing terminal equipment 117 waits for the parameter data of set values, value limits and the like to be supplied from the facsimile. Upon reception of the parameter data, the information processing terminal equipment 117 forms the user data registration menu for the remote control of the facsimile in accordance with the received parameter data (S212). After this menu is formed, the information processing terminal equipment 117 transmits the data read service command requesting the TYPE setting information to the facsimile via the interface (S213) and waits for the TYPE setting information from the facsimile. Upon reception of the TYPE setting information (S214), the information processing terminal equipment 117 identifies the TYPE setting information (or the destined country) (S215). The processes (S216 to S219) to be executed in accordance with the identification are the same as the flow chart (S204 to S207) shown in Fig. 2, and the description thereof is omitted.

In the system of this embodiment, the information processing terminal equipment 117 can set the functions of the facsimile. Setting of the facsimile by the information processing terminal equipment 117 will be described.

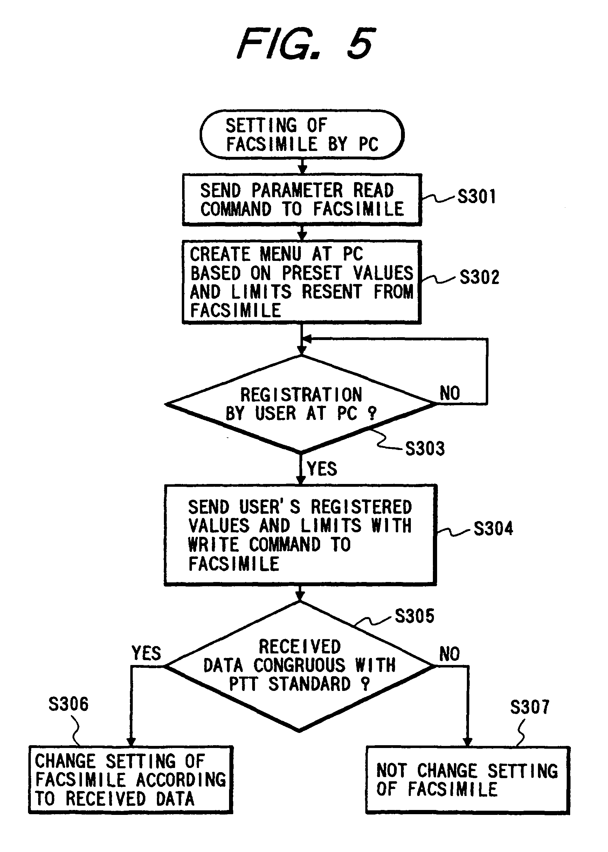

Fig. 5 is a flow chart illustrating the operation of setting the facsimile to be executed by the information processing terminal equipment 117.

Referring to Fig. 5, the information processing terminal equipment 117 transmits the data read service command via the interface to the facsimile, for acquiring the information on values, value limits and the like as presently set in the facsimile (S301). Upon reception of this data read service command, the facsimile reads the information on set values, value limits and the like from the EEPROM (or backed-up RAM) and transmits it as the parameter data in the predetermined format via the interface to the information processing terminal equipment 117. Upon reception of this parameter data, the information processing terminal equipment 117 forms the user data registration menu to be used for setting the facsimile, in accordance with the received parameter data (S302). Next, an operator of the information processing terminal equipment 117 instructs a setting registration operation by using a keyboard (or pointing device) while looking at a display screen. After the completion of the setting registration operation (S303), the operator instructs a setting execution operation, and in response to this instruction, the information processing terminal equipment 117 transmits the data write service command and the information (parameter data) on registered values, value limits and the like to the facsimile (S304). Upon reception of the data write service command, the facsimile checks whether the received parameter data is in conformity with the PTT standards of the destined country of the facsimile (S305). If the parameter data received from the information processing terminal equipment 117 is in conformity with the PTT standards, the setting of the facsimile is changed to the received parameters and a normal setting completion is notified to the information processing terminal equipment 117. In response to this notice, the terminal equipment 117 displays a message of the normal setting completion on the display screen (S306). If the received parameters are not in conformity with the PTT standards, the information processing terminal equipment 117 is notified of the fact that the parameters are not in conformity with the PTT standards, and the setting of the facsimile is not changed. Upon reception of this notice from the facsimile, the information processing terminal equipment 117 displays a message that the setting has not been completed normally a message for the operator prompting to change the parameters (S307).

With the above processes, an operator of the information processing terminal equipment 117 can change the setting of the facsimile without setting the parameters not in conformity with the PTT standards.

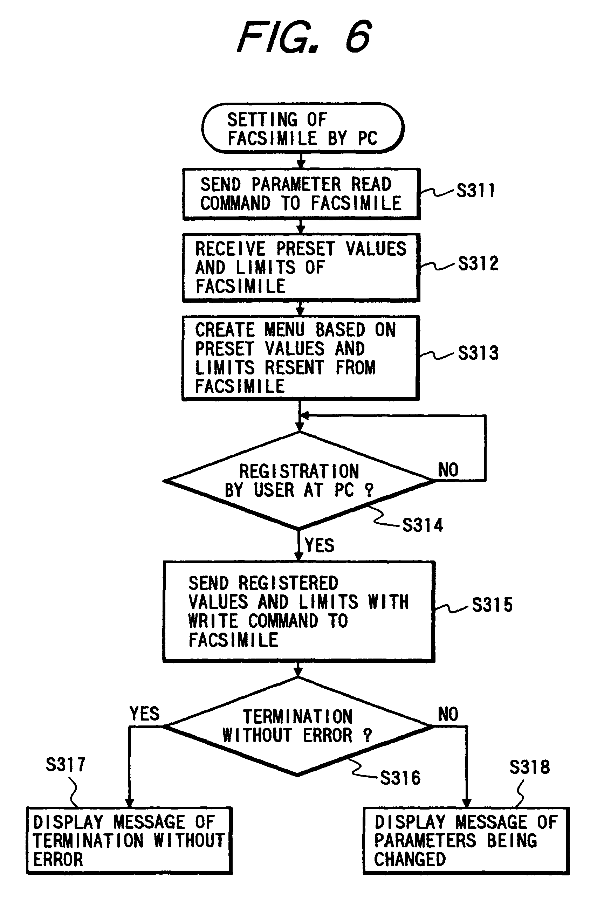

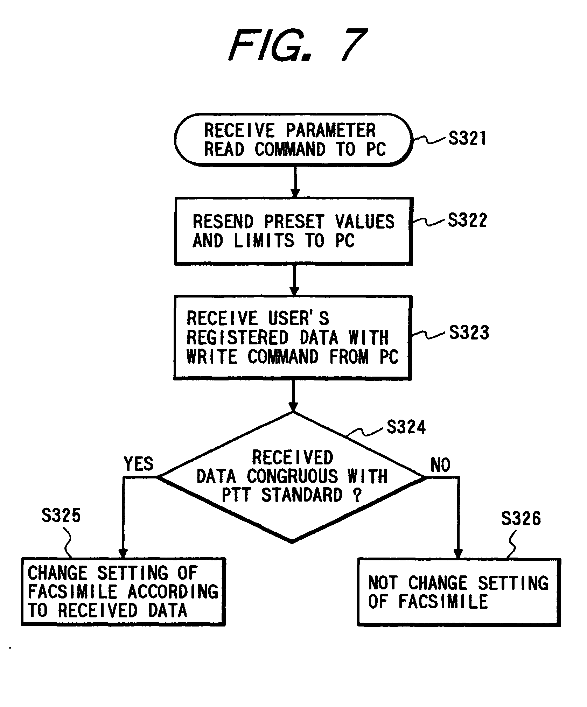

Fig. 6 is a flow chart illustrating the processes of the application software to be executed by the information processing terminal equipment 117 when the terminal equipment 117 sets the parameters of the facsimile. Fig. 7 is a flow chart illustrating the control operation to be executed by the CPU 101 of the facsimile.

Referring to Fig. 6, in response to an instruction of an operator, the application software of the information processing terminal equipment transmits the data read service command to the facsimile via the interface for acquiring the information on values, value limits and the like currently set in the facsimile (S311). The information processing terminal equipment 117 waits for the information (parameter data) on set values, value limits and the like to be supplied from the facsimile (S312). Upon reception of the parameter data, the information processing terminal equipment 117 forms the user data registration menu to be used for setting the facsimile, in accordance with the received parameter data (S313). The operator instructs the setting registration operation by using the keyboard (or pointing device) while looking at the displayed user data registration menu (S314). In response to this instruction, the information processing terminal equipment 117 forms parameter data to be used for setting the facsimile, and in response to an instruction of the setting execution operation entered by the operator, the terminal equipment 117 transmits the parameter data used for setting and the data write service command to the facsimile (S315). The information processing terminal equipment 117 waits for an execution result notice from the facsimile (S316). If the setting has been normally completed, the information processing terminal equipment 117 displays a message that the setting of the facsimile has been normally completed (S317). If the setting of the facsimile has not been completed normally, the terminal equipment 117 displays a message indicating that the setting has not been completed normally and a message for prompting the operator to change the parameters (S318).

Referring to Fig. 7, upon reception of the data read service command requesting for the information on set values, value limits and the like from the information processing terminal equipment 117 (S321), the CPU 101 of the facsimile reads the information on set values, value limits and the like from the EEPROM and transmits it as the parameter data of the predetermined format to the information processing terminal equipment 117 via the interface (S322). The facsimile waits for the data write service command and parameter data used for setting to be supplied from the information processing terminal equipment 117 (S323). Upon reception of the data write service command and parameter data used for setting from the information processing terminal equipment 117, the facsimile checks whether the received parameter data is in conformity with the PTT standards of the destined country of the facsimile (S324). If the received parameter data is in conformity with the PTT standards, the setting of the facsimile is changed in accordance with the received parameter data to update the contents of the EEPROM and notifies the information processing terminal equipment 117 of a normal setting change completion (S325). If the received parameter data is not in conformity with the PTT standards, the information processing terminal equipment is notified of the fact that the setting change has not been executed and the parameter data is not in conformity with the PTT standards.

Next, the transfer of commands between the information processing terminal equipment 117 and the facsimile in the above embodiment will be described in detail.

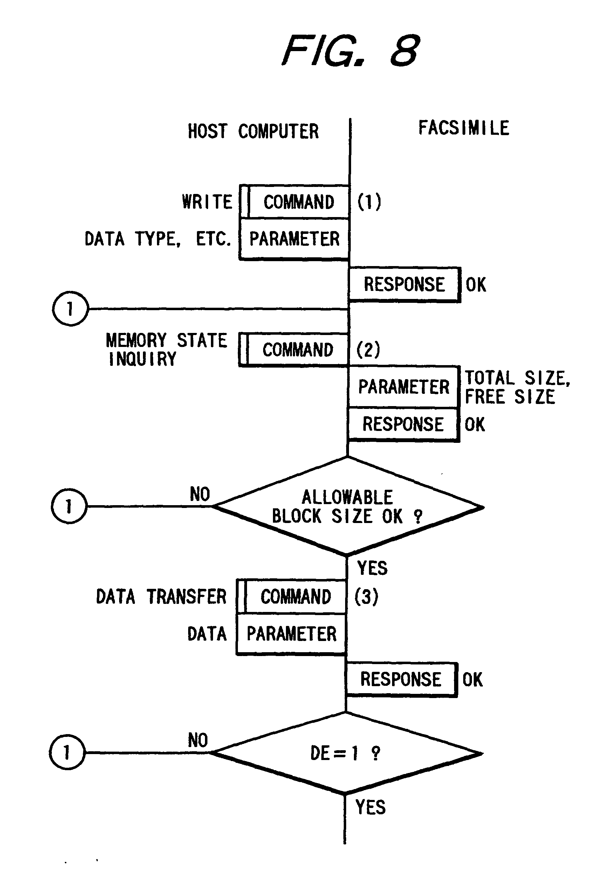

Fig. 8 shows a command flow indicating a communication sequence of data write service.

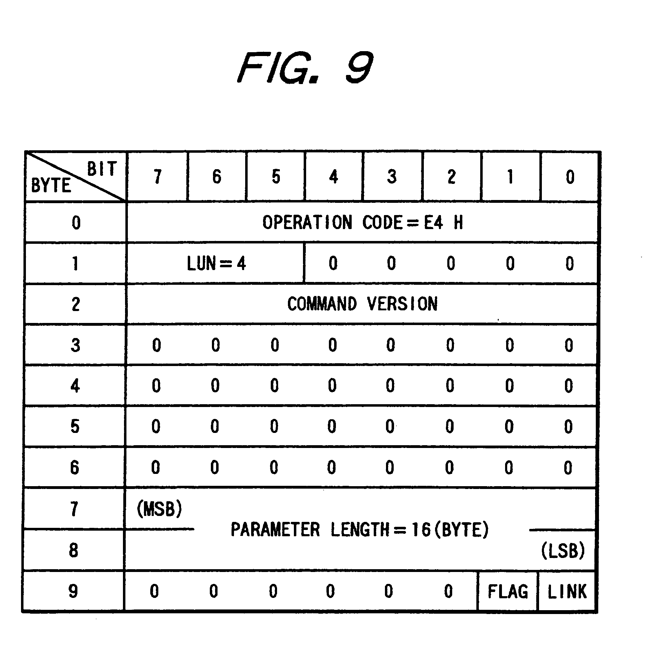

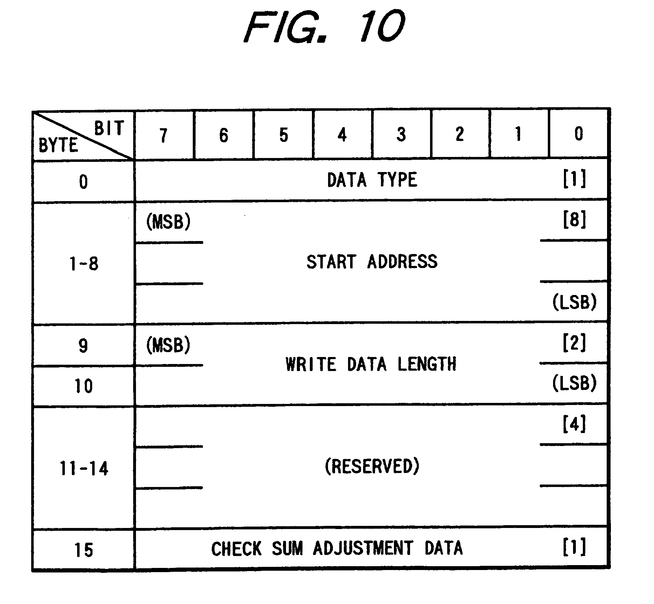

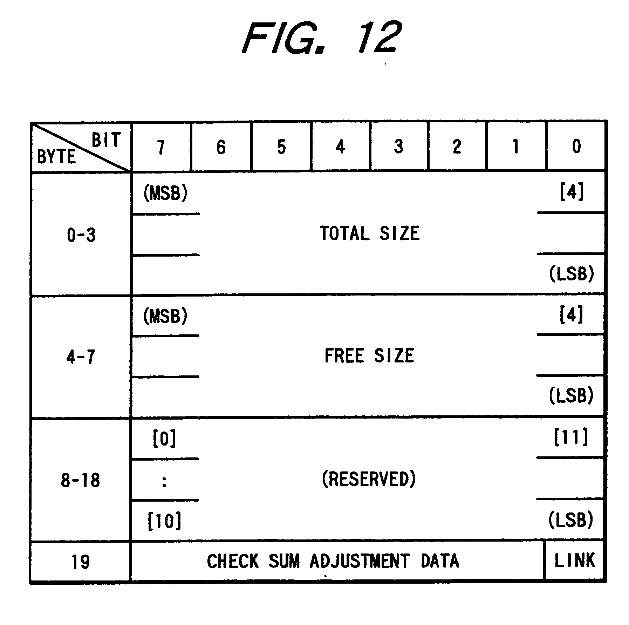

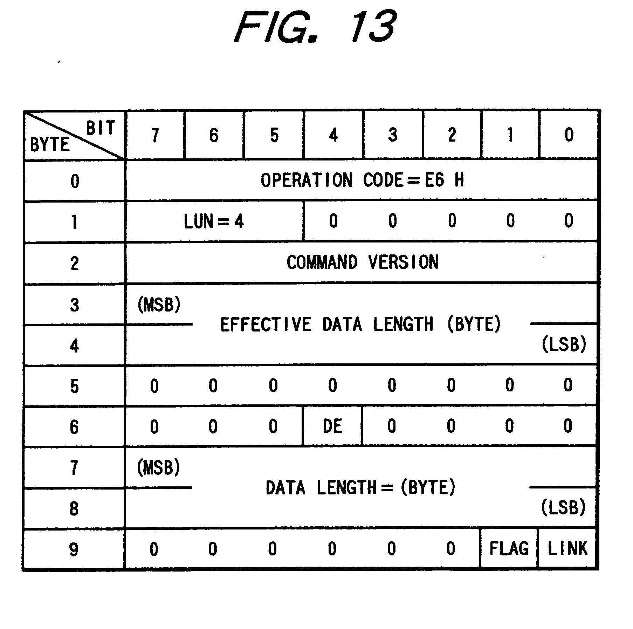

This data write service is a service for writing data transmitted from an information processing terminal equipment in a memory area of the facsimile designated by the information processing terminal equipment. This data write service is executed by a data write command, a memory state inquiry command and a data transfer command.
(1) First, an information processing terminal equipment transmits the data write command to a facsimile. This command notifies that the information processing terminal equipment transfers write data to the facsimile. After this command, the write data is transmitted from the information processing terminal equipment to the facsimile. Fig. 9 shows the format of CDB of the data write command.
   The data write command contains various parameters whose format is shown in Fig. 10. The details of these parameters are given in the following.
   A parameter "data type" designates the type of write data.
   A parameter "start address" designates the start address of write data. This parameter is valid only when the data type parameter designates "binary".
   A parameter "write data length" designates the length of write data. This parameter is valid only when the data type designates "binary".
   Upon reception of this data write command, the facsimile returns a response.
(2) Next, the information processing terminal equipment transmits the memory state inquiry command.

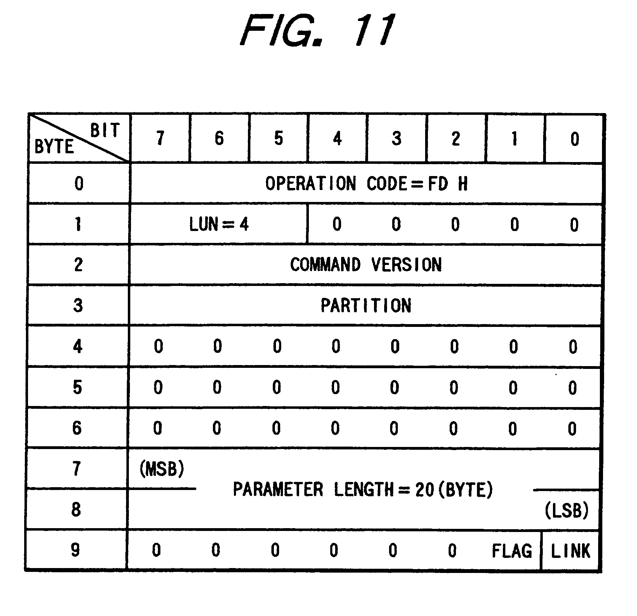

   Fig. 11 shows the format of CDB of the memory state inquiry command. This command is used for inquiring the memory state of the facsimile before the information processing terminal equipment transmits the data transfer command. LUN of CDB is set to "4" and a FIFO area (00h) is designated in a "partition" field of the data write service.
   Upon reception of the memory state inquiry command, the facsimile returns parameters and a response. Fig. 12 shows the format of parameters responsive to the memory state inquiry command. The details of these parameters are given in the following.
   A parameter "total size" is returned as binary data indicating the total capacity (byte number) of the designated memory area.
   A parameter "free size" is returned as binary data indicating the total capacity (byte number) of an empty area of the designated memory area at the time when this command is received.
(3) If the information processing terminal equipment judges that there is no problem on the allowable block size in the facsimile, it transmits the data transfer command to the facsimile. This data transfer command is used when the information processing terminal equipment transmits data to the facsimile. Fig. 13 shows the format of CDB of the data transfer command.

After the information processing terminal equipment transmits the data transfer command once, it transfers data having the number of bytes designated in a "data length" field of CDB to the facsimile.

The unit of data having the number of bytes designated in the "data length" field of CDB is called a block. The length of the block is called a block length. The block length takes a desired even number length from 2 bytes to 64 K - 2 bytes.

An "effective data length" field designates the effective length of write data. The effective data length is represented by a binary value from 1 byte to 64 K - 3 bytes. The relationship between the "data length" and the "effective data length" is given as in the following.

If the effective data length takes an odd number, "data length" = "effective data length" + 1, whereas if the effective data length takes an even number, "data length" = "effective data length" + 2. A DE flag is set to "1" when the last block of write data is transferred.

If the facsimile cannot enter the data having the block size designated in the "data length" field in CDB when this command is received, the facsimile returns a response NG and forcibly terminates the data write service. In this case, "designated block length is not suitable" is returned as sense data.

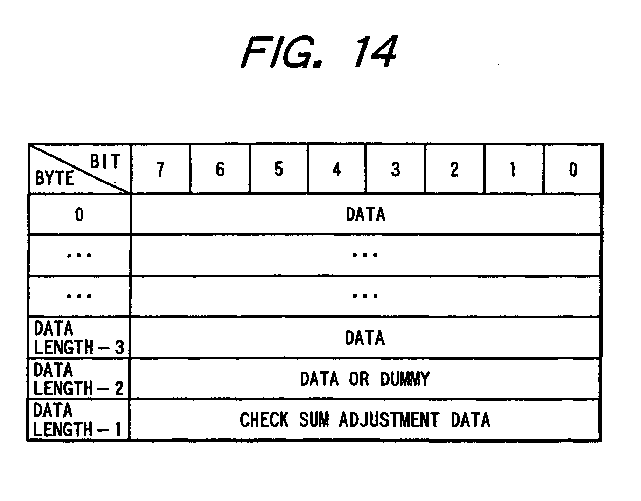

The data transfer command contains parameters whose format is shown in Fig. 14. The details of these parameters are given in the following.

A parameter "data" is set with data of the data type designated by the data write command.

A parameter "data or dummy" is used for adding one byte dummy when the effective data length takes an even number.

By using the above-described communication sequence of the data write service, the information processing terminal equipment conducts the setting of the facsimile.

Next, the communication sequence in data read service between the information processing terminal equipment and the facsimile will be described in detail.

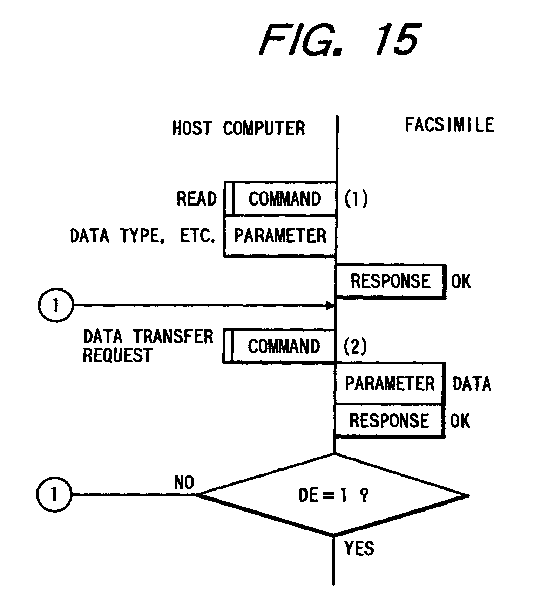

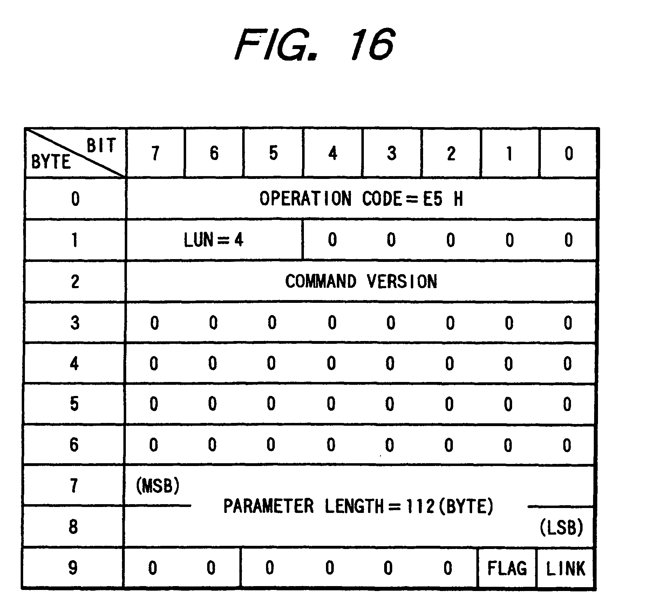

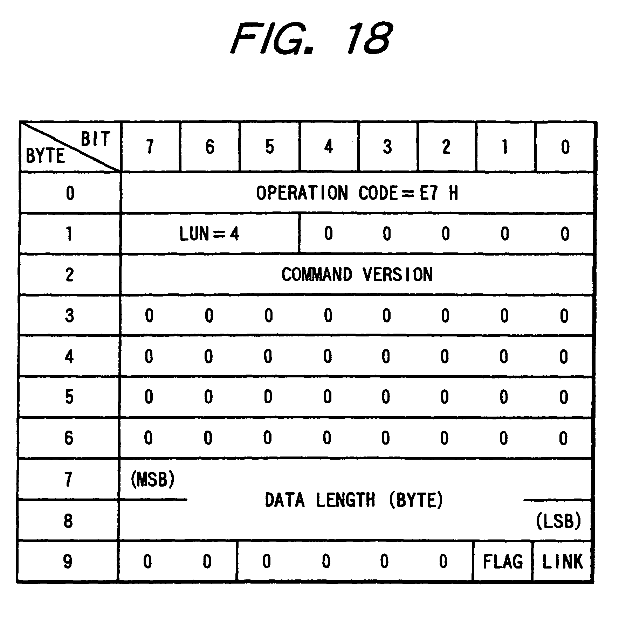

Fig. 15 is a diagram showing the communication sequence in the data read service. This data read service is a service for transferring data in the facsimile as requested by the information processing terminal equipment from the facsimile to terminal equipment. This service is executed by a data read command and a data transfer request command.
(1) First, the information processing terminal equipment transmits the data read command to a facsimile. Fig. 16 shows the format of CDB of the data read command. This command requests for designation to the data in the facsimile by the terminal equipment and the transfer of the designated data. The read data is transferred from the facsimile to the information processing terminal equipment in response to the data transfer request command transmitted after the data read command.

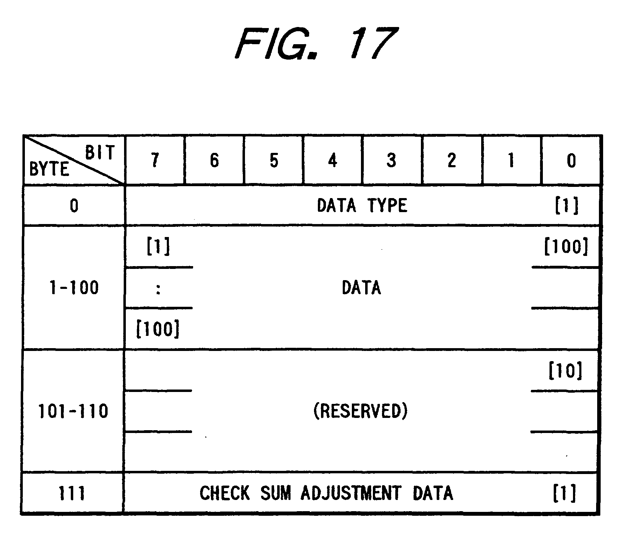

   Fig. 17 shows the format of parameters contained in the data read command. The details of these parameters are given in the following.
   A parameter "data type" designates the type of read data.
   A parameter "data" is set with data in conformity with a communication command system used between the information processing terminal equipment and the facsimile.
   A parameter "start address" designates the start address of read data.
   A parameter "read data length" designates the length of read data.
   Upon reception of the data read command, the facsimile returns a response.
(2) Next, upon reception of the response from the facsimile, the information processing terminal equipment transmits the data transfer request command to the facsimile. Fig. 18 shows the format of CDB of the data transfer request command. The maximum length of data to be transferred from the facsimile responsive to the data transfer request command is designated for each of the commands by the information processing terminal equipment in a "data length" field. The unit of data having the number of bytes designated in the "data length" field of CDB is called a block and the length of the block is called a block length.

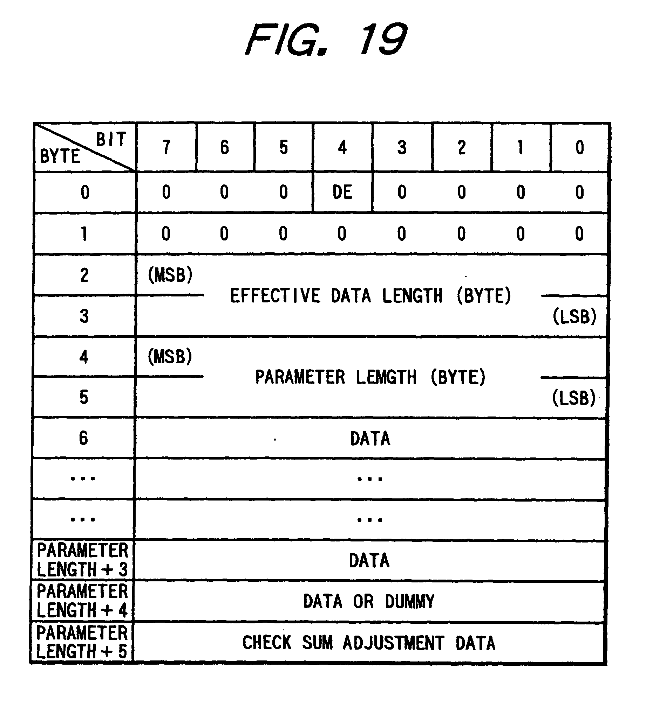

In response to the data transfer request command, the facsimile transmits parameters and a response. Fig. 19 shows the format of these parameters the details of which are given in the following.

A parameter "DE" flag is set to "1" when the last block of read data is transferred.

A parameter "effective data length" field designates the effective length by binary value.

A parameter "parameter length" sets a binary value of the parameter length after the "effective data length" field.

The "parameter length" takes an even length from 2 bytes to 64 K - 8 bytes.

A parameter "data" is set with data of the data type designated by the data read command.

A parameter "data or dummy" is used for adding one byte dummy when the effective data length takes an even number.

By using the above-described communication sequence of the data write service, the information processing terminal equipment requests for the information on set values, value limits and the like of the facsimile and causes the transfer of the information from the facsimile to the information processing terminal equipment.

As described above, according to the system of this embodiment, not only a facsimile itself but also the entire system can be made to satisfy the PTT standards of the destined country.

In this embodiment, in response to a request from the information processing terminal equipment, information on the standards of the destined country stored in the communication apparatus is transmitted to the information processing terminal equipment. So, in accordance with this information, functions can be set on the registration setting menu for the remote control of the communication apparatus in the information processing terminal equipment, and also the active system comprising the communication apparatus and the information processing terminal equipment can be operated to satisfy the standards of the destined country.

When the computer software for the remote control of the communication apparatus is started at the information processing terminal equipment, this software automatically requests the communication apparatus to transfer the information on the standards of the destined country. Therefore, the operation to be executed by an operator of the information processing terminal equipment can be simplified.

The invention is not limited only to the above embodiments, but various modifications are possible.

## Claims

1. A communication apparatus capable of conducting communication via a first line, of being connected via a second line to an information processing terminal equipment having a program for instructing the communication apparatus to conduct communication via the first line, and of being controlled remotely by the information processing terminal equipment, said communication apparatus comprising:
storage means (102) for storing information on the set communication standards of destination countries of the communication apparatus for communications to be conducted via the first line;
reception means (114) for receiving via the second line an information transfer request with regard to a selected destination country from the information processing terminal equipment, and
transmission means (101,102,114) adapted in response to the reception of an information transfer request, to read the information relating to the set communication standards of said selected destination country from said storage means and to transmit the read information to the information processing terminal equipment via the second line in order to enable the information processing terminal to control the communication apparatus to carry out a transmission over the first line with said selected destination country with the communication standards of that country.

2. Apparatus according to claim 1, further comprising:
selection means (112) for selecting information on the standards of a particular country from the information stored in said storage means.

3. Apparatus according to claim 1 or claim 2, wherein the apparatus is a facsimile apparatus and wherein said storage means is adapted, in addition to the information on the standards to store information on the set values, the value limits and the like of the facsimile apparatus and wherein in response to a first request from the information processing terminal equipment, said transmission means is adapted to transmit the information on said set values, value limits and the like to the information processing terminal equipment, and thereafter in response to a second request from the information processing terminal equipment, to transmit data to a destination country.

4. A system comprising a communication apparatus according to any one of the preceding claims and an information processing terminal, said terminal having means for sending a request for information to said communication apparatus, and means responsive to information received from said communication apparatus to display a menu by means of which said communication apparatus can be remotely controlled by said information processing terminal so as to carry out communication with selected countries.

5. A communication method in which a communication apparatus capable of conducting communication via a first line and connected via a second line to an information processing terminal equipment having a program for instructing and controlling the communication apparatus to conduct communication via the first line, said method comprising:
holding in storage means in said communication apparatus information on the set communication standards of destination countries which can be communicated with by the communication apparatus via the first line;
receiving via the second line an information transfer request from the information processing terminal equipment with regard to the set communication standards of a selected destination country,
reading the information on the set communication standards of the said selected destination country from said storage means in response to said information transfer request;
transmitting the read information to the information processing terminal equipment via the second line, the information processing terminal utilising the received information to control the communication apparatus to carry out a transmission over the first line with said selected destination country with the set communication standards of that country.

6. A method according to claim 5, wherein the communication apparatus is a facsimile apparatus and wherein said storage means, in addition to the information on the standards of destination countries stores information on the set values, the value limits and the like of the facsimile apparatus and wherein in response to a first request from the information processing terminal equipment, said transmission means transmits the information on said set values, value limits and the like to the information processing terminal equipment, and thereafter in response to a second request from the information processing terminal equipment, to transmit the information on the standards of a country.

7. A method according to claim 5 or claim 6, wherein said information processing terminal in response to information received from said communication apparatus displays a menu by means of which a user remotely controls said communication apparatus.

## Patentansprüche

1. Kommunikationsvorrichtung, die fähig ist, über eine erste Leitung eine Kommunikation durchzuführen, über eine zweite Leitung mit einem Informationsverarbeitungsendgerät verbunden zu sein, das ein Programm aufweist, um die Kommunikationsvorrichtung anzuweisen, eine Kommunikation über die erste Leitung durchzuführen, sowie von dem Informationsverarbeitungsendgerät ferngesteuert zu werden, mit:
einer Speichereinrichtung (102) zum Speichern von Informationen über die festgelegten Kommunikationsstandards von Bestimmungsländern der Kommunikationsvorrichtung für über die erste Leitung durchzuführende Kommunikationen;
einer Empfangseinrichtung (114) zum Empfangen einer Informationsübermittlungsanforderung bezüglich eines ausgewählten Bestimmungslands von dem Informationsverarbeitungsendgerät über die zweite Leitung, und
einer Übertragungseinrichtung (101, 102, 114), die angepasst ist, in Erwiderung auf den Empfang einer Informationsübermittlungsanforderung die Informationen mit Bezug auf die festgelegten Kommunikationsstandards des ausgewählten Bestimmungslands aus der Speichereinrichtung zu lesen und die gelesenen Informationen über die zweite Leitung an das Informationsverarbeitungsendgerät zu übertragen, um das Informationsverarbeitungsendgerät zu befähigen, die Kommunikationsvorrichtung zu steuern, um eine Übertragung mit dem ausgewählten Bestimmungsland anhand von den Kommunikationsstandards von diesem Land über die erste Leitung auszuführen.

2. Vorrichtung gemäß Anspruch 1, zusätzlich mit:
einer Auswahleinrichtung (112) zum Auswählen von Informationen über die Standards eines bestimmten Lands aus den in der Speichereinrichtung gespeicherten Informationen.

3. Vorrichtung gemäß Anspruch 1 oder Anspruch 2, wobei die Vorrichtung ein Faxgerät ist und wobei die Speichereinrichtung angepasst ist, zusätzlich zu den Informationen über die Standards Informationen über die eingestellten Werte, die Wertgrenzen und dergleichen des Faxgeräts zu speichern, und wobei die Übertragungseinrichtung angepasst ist, in Erwiderung auf eine erste Anforderung von dem Informationsverarbeitungsendgerät die Informationen über die eingestellten Werte, Wertgrenzen und dergleichen an das Informationsverarbeitungsendgerät zu übertragen und danach in Erwiderung auf eine zweite Anforderung von dem Informationsverarbeitungsendgerät Daten an ein Bestimmungsland zu übertragen.

4. System mit einer Kommunikationsvorrichtung gemäß einem der vorhergehenden Ansprüche und einem Informationsverarbeitungsendgerät, wobei das Endgerät eine Einrichtung zum Senden einer Anforderung nach Informationen an die Kommunikationsvorrichtung und eine Einrichtung aufweist, die auf von der Kommunikationsvorrichtung empfangene Informationen anspricht, um ein Menü anzuzeigen, mit Hilfe dessen die Kommunikationsvorrichtung von dem Informationsverarbeitungsendgerät ferngesteuert werden kann, um eine Kommunikation mit ausgewählten Ländern auszuführen.

5. Kommunikationsverfahren, bei dem eine Kommunikationsvorrichtung beteiligt ist, die fähig ist, über eine erste Leitung eine Kommunikation durchzuführen und über eine zweite Leitung mit einem Informationsverarbeitungsendgerät verbunden zu sein, das ein Programm aufweist, um die Kommunikationsvorrichtung anzuweisen und zu steuern, eine Kommunikation über die erste Leitung durchzuführen, mit den Schritten:
Halten von Informationen über die festgelegten Kommunikationsstandards von Bestimmungsländern, mit denen anhand von der Kommunikationsvorrichtung über die erste Leitung kommuniziert werden kann, in einer Speichereinrichtung in der Kommunikationsvorrichtung;
Empfangen einer Informationsübermittlungsanforderung bezüglich der festgelegten Kommunikationsstandards eines ausgewählten Bestimmungslands von dem Informationsverarbeitungsendgerät über die zweite Leitung;
Lesen der Informationen über die festgelegten Kommunikationsstandards des ausgewählten Bestimmungslands aus der Speichereinrichtung in Erwiderung auf die Informationsübermittlungsanforderung;
Übertragen der gelesenen Informationen über die zweite Leitung an das Informationsverarbeitungsendgerät, wobei das Informationsverarbeitungsendgerät die empfangenen Informationen einsetzt, um die Kommunikationsvorrichtung zu steuern, eine Übertragung mit dem ausgewählten Bestimmungsland anhand von den festgelegten Kommunikationsstandards von diesem Land über die erste Leitung auszuführen.

6. Verfahren gemäß Anspruch 5, wobei die Kommunikationsvorrichtung ein Faxgerät ist und wobei die Speichereinrichtung zusätzlich zu den Informationen über die Standards von Bestimmungsländern Informationen über die eingestellten Werte, Wertgrenzen und dergleichen des Faxgeräts speichert, und wobei die Übertragungseinrichtung in Erwiderung auf eine erste Anforderung von dem Informationsverarbeitungsendgerät die Informationen über die eingestellten Werte, Wertgrenzen und dergleichen an das Informationsverarbeitungsendgerät überträgt und danach in Erwiderung auf eine zweite Anforderung von dem Informationsverarbeitungsendgerät die Informationen über die Standards eines Lands überträgt.

7. Verfahren gemäß Anspruch 5 oder Anspruch 6, wobei das Informationsverarbeitungsendgerät in Erwiderung auf von der Kommunikationsvorrichtung empfangene Informationen ein Menü anzeigt, mit Hilfe dessen ein Benutzer die Kommunikationsvorrichtung fernsteuert.

## Revendications

1. Appareil de communication capable de mener une communication sur une première ligne, d'être connecté par une seconde ligne à un équipement terminal de traitement d'informations ayant un programme destiné à piloter l'appareil de communication afin de mener une communication sur la première ligne et d'être commandé à distance par l'équipement terminal de traitement d'informations, ledit appareil de communication comprenant :
un moyen de stockage (102) destiné à stocker des informations sur les normes de communication adoptées dans des pays de destination de l'appareil de communication, pour des communications à mener sur la première ligne ;
un moyen de réception (114) destiné à recevoir de l'équipement terminal de traitement d'informations, sur la seconde ligne, une demande de transfert d'informations portant sur un pays de destination sélectionné, et
un moyen d'émission (101, 102, 114) adapté pour, en réponse à la réception d'une demande de transfert d'informations, lire les informations concernant les normes de communication adoptées dans ledit pays de destination sélectionné, à partir dudit moyen de stockage, et émettre les informations lues vers l'équipement terminal de traitement d'informations sur la seconde ligne, afin de permettre au terminal de traitement d'informations de commander l'appareil de communication pour réaliser une émission sur la première ligne vers ledit pays de destination sélectionné, en utilisant les normes de communication de ce pays.

2. Appareil selon la revendication 1, comprenant en outre :
un moyen de sélection (112) destiné à sélectionner des informations sur les normes d'un pays particulier parmi les informations stockées dans ledit moyen de stockage.

3. Appareil selon la revendication 1 ou la revendication 2, dans lequel l'appareil est un appareil de télécopie, et dans lequel ledit moyen de stockage est adapté pour stocker, en plus des informations sur les normes, des informations sur les valeurs des paramètres, les limites de valeurs, etc. de l'appareil de télécopie et dans lequel, en réponse à une première demande provenant de l'équipement terminal de traitement d'informations, ledit moyen d'émission est adapté pour émettre les informations sur lesdites valeurs des paramètres, limites de valeurs, etc., vers l'équipement terminal de traitement d'informations, et ensuite, en réponse à une seconde demande provenant de l'équipement terminal de traitement d'informations, pour émettre des données vers un pays de destination.

4. Système comprenant un appareil de communication selon l'une quelconque des revendications précédentes et un terminal de traitement d'informations, ledit terminal possédant un moyen destiné à envoyer une demande d'informations audit appareil de communication et un moyen qui, en réponse à des informations reçues dudit appareil de communication, affiche un menu grâce auquel ledit appareil de communication peut être télécommandé par ledit terminal de traitement d'informations, afin de réaliser des communications avec des pays sélectionnés.

5. Procédé de communication dans lequel un appareil de communication capable de mener une communication sur une première ligne et connecté par une seconde ligne à un équipement terminal de traitement d'informations ayant un programme destiné à piloter et commander l'appareil de communication afin de mener une communication sur la première ligne, ledit procédé comprenant les étapes consistant à :
stocker dans un moyen de stockage dudit appareil de communication des informations sur les normes de communication adoptées dans les pays de destination avec lesquels l'appareil de communication peut communiquer sur la première ligne ;
recevoir de l'équipement terminal de traitement d'informations, sur la seconde ligne, une demande de transfert d'informations portant sur les normes de communication adoptées dans un pays de destination sélectionné ;
lire les informations contenant les normes de communication adoptées dans ledit pays de destination sélectionné, à partir dudit moyen de stockage, en réponse à ladite demande de transfert d'informations ;
émettre les informations lues vers l'équipement terminal de traitement d'informations sur la seconde ligne, le terminal de traitement d'informations utilisant les informations reçues pour commander l'appareil de communication afin qu'il réalise une émission sur la première ligne vers ledit pays de destination sélectionné, en utilisant les normes de communication adoptées dans ce pays.

6. Procédé selon la revendication 5, dans lequel l'appareil de communication est un appareil de télécopie et dans lequel ledit moyen de stockage mémorise, en plus des informations sur les normes de pays de destination, des informations sur les valeurs des paramètres, les limites de valeurs, etc. de l'appareil de télécopie et dans lequel, en réponse à une première demande provenant de l'équipement terminal de traitement d'informations, ledit moyen d'émission émet les informations sur lesdites valeurs des paramètres, limites de valeurs, etc., vers l'équipement terminal de traitement d'informations, et ensuite, en réponse à une seconde demande provenant de l'équipement terminal de traitement d'informations, émet les informations sur les normes d'un pays.

7. Procédé selon la revendication 5 ou la revendication 6, dans lequel ledit terminal de traitement d'informations, en réponse aux informations reçues dudit appareil de communication, affiche un menu grâce auquel un utilisateur commande à distance ledit appareil de communication.
